# EUROPÄISCHE PATENTANMELDUNG

(11) **EP 1 289 332 A2**
(43) Veröffentlichungstag der Anmeldung: **05.03.2003**
(21) Anmeldenummer: 02102012.8
(22) Anmeldetag: 09.07.2002
(51) Int. Cl.: H04Q 11/00

(54) **Vorrichtung und Verfahren zum Einrichten von Ersatzpfaden in einem Transportnetz**

(30) Priorität: 09.08.2001 DE 10139156
(71) Anmelder: SIEMENS AKTIENGESELLSCHAFT, 80333 München (DE)
(72) Erfinder: Charzinski, Joachim, Dr., 85764, Oberschleissheim (DE); Schupke, Dominic Axel, 80339, München (DE)

(57) **Zusammenfassung**

Die Erfindung betrifft eine Sende-/Empfangseinrichtung (9a) zur Verwendung in einem optischen Nachrichtennetzwerk (8), ein optisches Nachrichtenübermittlungsverfahren, sowie ein optisches Nachrichtennetzwerk (8), bei welchem über eine erste Datenverbindung optische Signale von einer ersten Sende-/Empfangseinrichtung (9a) über mehrere miteinander verbundene Netzknoteneinrichtungen (1, 2, 3, 4, 5, 6, 7) an eine zweite Sende-/Empfangseinrichtung (9b) übermittelt werden, dadurch **gekennzeichnet**, dass zum Aufbau einer zweiten Datenverbindung zwischen erster und zweiter Sende-/Empfangseinrichtung (9a, 9b) von der ersten Sende-/Empfangseinrichtung (9a) ein Datenverbindungsaufbau-Signalisiersignal (S1) an eine mit der ersten Sende-/Empfangseinrichtung (9a) verbundene Netzknoteneinrichtung (1) gesendet wird, in welchem Informationen bezüglich des gewünschten Verlaufs der zweiten Datenverbindung enthalten sind.

## Beschreibung

Die Erfindung betrifft ein optisches Nachrichtennetzwerk gemäß Oberbegriff des Anspruchs 1, eine Sende-/Empfangseinrichtung zur Verwendung in einem derartigen optischen Nachrichtennetzwerk, sowie ein optisches Nachrichtenübermittlungsverfahren gemäß Oberbegriff des Anspruchs 20.

Optische Nachrichtennetzwerke weisen im Allgemeinen eine erste Sende-/Empfangseinrichtungen auf, von welcher aus über eine Datenverbindung optische Signale unter Zwischenschaltung mehrerer miteinander verbundener Netzknoteneinrichtungen an eine zweite Sende-/Empfangseinrichtung übermittelt werden. Die Netzknoteneinrichtungen können z.B. jeweils über einen oder mehrere Lichtwellenleiter miteinander verbunden sein.

Die Datenübertragung innerhalb des Nachrichtennetzes kann beispielsweise mit Hilfe von optischen WDM-Binärsignalen erfolgen ("WDM" = wavelength division multiplex bzw. Wellenlängen-Multiplex). Dabei werden über einen einzigen Lichtwellenleiter mehrere, wellenlängengemultiplexte, gepulste optische Signale übertragen.

Im Nachrichtennetz kann z.B. eine zentrale Steuereinrichtung vorgesehen sein, die beim Auftreten von Störungen auf der ersten Datenverbindung veranlaßt, daß die von der ersten Sende-/Empfangseinrichtung ausgesendeten optischen Signale fortan über eine zweite, zur ersten Datenverbindung unterschiedlichen Datenverbindung übertragen werden.

Die Erfindung hat zur Aufgabe, ein neuartiges optisches Nachrichtennetzwerk, eine neuartige Sende-/Empfangseinrichtung zur Verwendung in einem optischen Nachrichtennetzwerk, sowie ein neuartiges optisches Nachrichtenübermittlungsverfahren zur Verfügung zu stellen.

Sie erreicht dieses und weitere Ziele durch die Gegenstände der Ansprüche 1 , 19 und 20.

Vorteilhafte Weiterbildungen der Erfindung sind in den Unteransprüchen angegeben.

Gemäß einem Grundgedanken der Erfindung wird ein optisches Nachrichtennetzwerk bereitgestellt, bei welchem über eine erste Datenverbindung optische Signale von einer ersten Sende-/Empfangseinrichtung über mehrere miteinander verbundene Netzknoteneinrichtungen an eine zweite Sende-/Empfangseinrichtung übermittelt werden, **dadurch gekennzeichnet**, dass zum Aufbau einer zweiten Datenverbindung zwischen erster und zweiter Sende-/Empfangseinrichtung von der ersten Sende-/Empfangseinrichtung ein Datenverbindungsaufbau-Signalisiersignal an eine mit der ersten Sende-/Empfangseinrichtung verbundene Netzknoteneinrichtung gesendet wird, in welchem Informationen bezüglich des gewünschten Verlaufs der zweiten Datenverbindung enthalten sind.

Bevorzugt soll die zweite Datenverbindung ganz oder teilweise disjunkt zur ersten Datenverbindung verlaufen (d.h. z.B. ganz oder teilweise über einen anderen Pfad, bzw. über andere Röhren, Lichtwellenleiterbündel, Lichtwellenleiter, usw.).

Treten auf der ersten Datenverbindung Störungen auf (z.B. weil die entsprechende Röhre, das entsprechende Lichtwellenleiterbündel, der entsprechende Lichtwellenleiter mechanisch beschädigt wurde), kann die Datenübertragung schnell von der ersten Datenverbindung auf die zweite (ungestörte) Datenverbindung umgeschaltet werden.

Im folgenden wird die Erfindung anhand mehrerer Ausführungsbeispiele und der beigefügten Zeichnung näher erläutert. In der Zeichnung zeigt:
Figur 1 eine schematische Darstellung eines optischen Nachrichtennetzwerks gemäß einem ersten Ausführungsbeispiel der vorliegenden Erfindung;
Figur 2 eine schematische Darstellung des zeitlichen Ablaufs von zwischen dem in Figur 1 gezeigten Teilnehmeranschluß, und dem in Figur 1 gezeigten ersten Netzknoten ausgetauschten Signalisiersignalen;
Figur 3 eine schematische Darstellung des zeitlichen Ablaufs von bei einem alternativen, zweiten Ausführungsbeispiel der Erfindung zwischen einem Teilnehmeranschluß, und einem Netzknoten ausgetauschten Signalisiersignalen;
Figur 4 eine schematische Darstellung eines optischen Nachrichtennetzwerks gemäß einem weiteren Ausführungsbeispiel der vorliegenden Erfindung; und
Figur 5 eine schematische Darstellung des zeitlichen Ablaufs von zwischen dem in Figur 4 gezeigten Teilnehmeranschluß, und dem in Figur 4 gezeigten ersten bzw. sechsten Netzknoten ausgetauschten Signalisiersignalen.

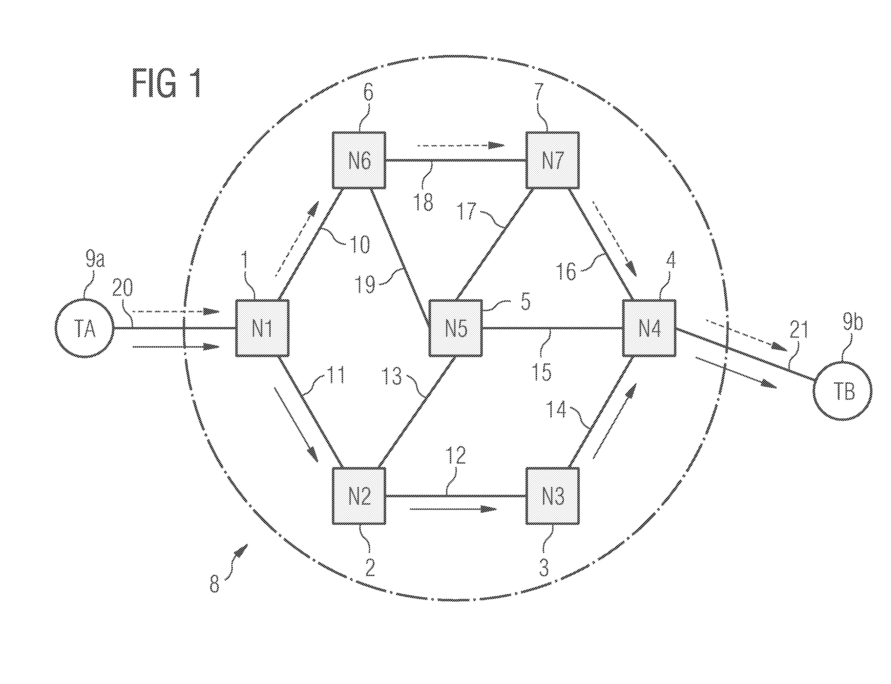

Gemäß Figur 1 weist ein optisches Nachrichtennetzwerk bzw. optisches Transportnetz (OTN) 8 gemäß einem ersten Ausführungsbeispiel der vorliegenden Erfindung eine Vielzahl von Netzknoten 1, 2, 3, 4, 5, 6, 7 auf, die über ein Netz von Lichtwellenleiterbündeln 10, 11, 12, 13, 14, 15, 16, 17, 18, 19 miteinander verbunden sind.

Beispielsweise verläuft vom ersten Netzknoten 1 ein erstes Lichtwellenleiterbündel 11 zum zweiten Netzknoten 2, von wo aus ein zweites Lichtwellenleiterbündel 12 zum dritten, und ein drittes Lichtwellenleiterbündel 13 zum fünften Netzknoten 5 verläuft. Auf entsprechende Weise ist z.B. der vierte Netzknoten 4 über ein viertes Lichtwellenleiterbündel 14 mit dem dritten Netzknoten 3, über ein fünftes Lichtwellenleiterbündel 15 mit dem fünften Netzknoten 5, und über ein sechstes Lichtwellenleiterbündel 16 mit dem siebten Netzknoten 7 verbunden. Des weiteren verläuft vom siebten Netzknoten 7 aus ein siebtes Lichtwellenleiterbündel 17 zum fünften Netzknoten 5, und ein achtes Lichtwellenleiterbündel 18 zum sechsten Netzknoten 6, von dem aus ein neuntes Lichtwellenleiterbündel 19 zum fünften, und ein zehntes Lichtwellenleiterbündel 10 zum ersten Netzknoten 1 verläuft.

Statt über jeweils ein einziges Lichtwellenleiterbündel 10, 11, 12, 13, 14, 15, 16, 17, 18, 19 können die einzelnen Netzknoten 1, 2, 3, 4, 5, 6, 7 z.B. jeweils auch über mehrere, parallele Lichtwellenleiterbündel verbunden sein. Jeweils ein oder mehrere, parallele Lichwellenleiterbündel befinden sich ein einer oder mehreren, zwischen den einzelnen Netzknoten 1, 2, 3, 4, 5, 6, 7 (z.B. teilweise unterirdisch) verlegten Röhren.

Jedes Lichtwellenleiterbündel 10, 11, 12, 13, 14, 15, 16, 17, 18, 19 weist einen oder mehrere Lichtwellenleiter auf.

Ein erster Netz-Teilnehmeranschluß (TA) 9a ist über einen ersten Lichtwellenleiter 20 (oder über ein weiteres Lichtwellenleiterbündel) an den ersten Netzknoten 1, und ein zweiter Netz-Teilnehmeranschluß (TB) 9b über einen zweiten Lichtwellenleiter 21 (oder über ein weiteres Lichtwellenleiterbündel) an den vierten Netzknoten 4 angeschlossen.

Zur Datenübertragung zwischen dem ersten Netz-Teilnehmeranschluß 9a und dem zweiten Netz-Teilnehmeranschluß 9b (und umgekehrt) kann z.B. ein WDM-Datenübertragungsverfahren verwendet werden ("WDM" = wavelength division multiplex bzw. Wellenlängen-Multiplex). Hierbei wird ein z.B. vom Netz-Teilnehmeranschluß 9a in den Lichtwellenleiter 20 eingespeistes, gepulstes optisches Binärsignal zunächst an den ersten Netzknoten 1, dann unter Zwischenschaltung verschiedener weiterer Netzknoten an den vierten Netzknoten 4, und von dort aus über den zweiten Lichtwellenleiter 21 an den zweiten Teilnehmeranschluß 9b übertragen.

In jedem der zwischen den einzelnen Netzknoten 1, 2, 3, 4, 5, 6, 7 geschalteten Lichtwellenleiterbündeln 10, 11, 12, 13, 14, 15, 16, 17, 18, 19 enthaltenen Lichtwellenleiter können mittels Wellenlängenmultiplex mehrere verschiedene, gepulste optische Binärsignale übertragen werden (die z.B. außer zur Datenübertragung zwischen dem ersten und zweiten Teilnehmeranschluß 9a, 9b z.B. zur Datenübertragung zwischen mehreren weiteren, hier nicht dargestellten Teilnehmeranschlüssen dienen).

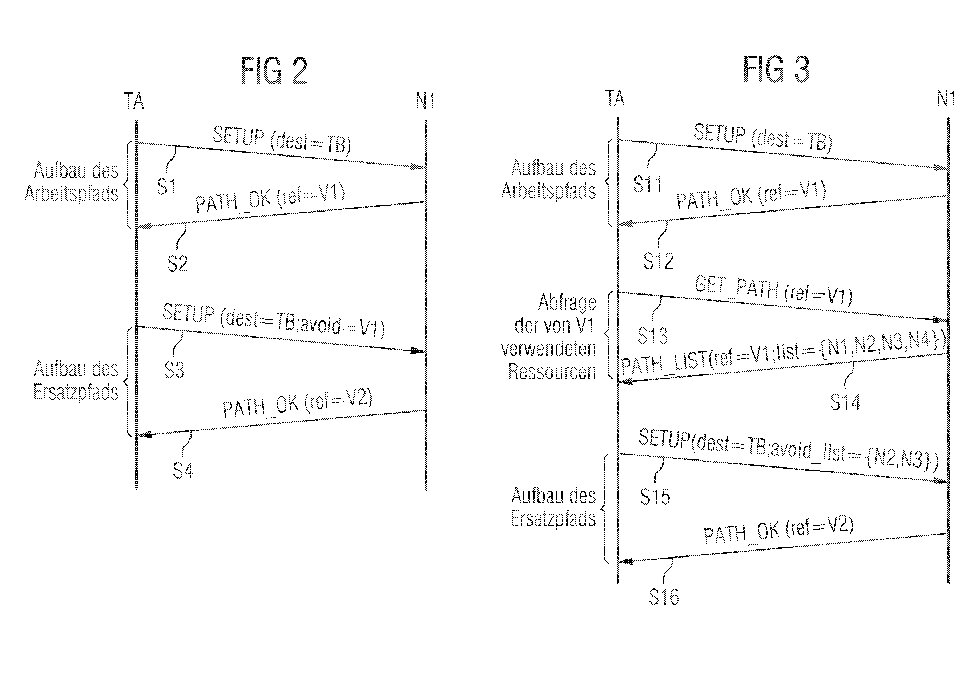

Zum Aufbau einer (ersten, ungesicherten "Arbeits"-) Datenverbindung zwischen erstem und zweiten Teilnehmeranschluß 9a, 9b wird vom ersten Teilnehmeranschluß (TA) 9a aus gemäß Figur 2 mittels entsprechender über den Lichtwellenleiter 20 übertragener optischer Binärimpulse ein erstes Signalisiersignal S1 (SETUP (dest=TB)) an den ersten Netzknoten (N1) 1 gesendet. In diesem (Verbindungsaufbau-Anfrage-)Signalisiersignal S1 ist eine Kennung TB enthalten, die den Ziel-Teilnehmeranschluß (TB) 9b, bzw. dessen optische Netzadresse kennzeichnet.

Daraufhin wird im ersten Netzknoten 1 von einer Netzknoten-Steuereinrichtung (nicht dargestellt) eine die aufzubauende Verbindung kennzeichnende (noch nicht vergebene) Verbindungskennung (hier: V1) ausgewählt, und in einer (ebenfalls nicht dargestellten) Netzknoten-Speichereinrichtung abgespeichert. Der erste Netzknoten N1 (bzw. die Netzknoten-Steuereinrichtung) wählt dann einen der mit dem ersten Netzknoten 1 verbundenen Netzknoten als denjenigen Netzknoten aus, über den die Verbindung weitergeführt werden soll (hier: den zweiten Netzknoten 2). Daraufhin wird eine diesem Netzknoten 2 zugeordnete Kennung (bzw. dessen Netzadresse) unter Zuordnung zur o.g. Verbindungskennung V1 in der Netzknoten-Speichereinrichtung des ersten Netzknotens 1 abgespeichert. Als nächstes wird von der Netzknoten-Steuereinrichtung veranlaßt, daß vom ersten Netzknoten 1 aus über das Lichtwellenleiterbündel 11 ein dem o.g. Signalisiersignal S1 entsprechendes weiteres Signalisiersignal an den ausgewählten zweiten Netzknoten 2 gesendet wird, das u.a. die o.g. den Ziel-Teilnehmeranschluß (TB) kennzeichnende Kennung TB, sowie die o.g. Verbindungskennung V1 enthält.

Die Verbindungskennung V1 wird in einer (nicht dargestellten) Speichereinrichtung des zweiten Netzknotens 2 abgespeichert. Dann wird in einer (ebenfalls nicht dargestellten) Netzknoten-Steuereinrichtung auf entsprechende Weise wie im ersten Netzknoten 1 zur Weiterführung der "Arbeits"-Datenverbindung einer der mit dem zweiten Netzknoten 2 verbundenen Netzknoten (hier: der dritte Netzknoten 3) ausgewählt, und eine diesem Netzknoten 3 zugeordnete Kennung (bzw. dessen Netzadresse) unter Zuordnung zur o.g. Verbindungskennung V1 in der Netzknoten-Speichereinrichtung abgespeichert. Als nächstes wird von der Netzknoten-Steuereinrichtung veranlaßt, daß vom zweiten Netzknoten 2 aus an den ausgewählten dritten Netzknoten 3 ein dem o.g. Signalisiersignal SETUP (dest=TB) entsprechendes weiteres Signalisiersignal gesendet wird, usw.

Auf diese Weise wird sukzessive eine über den Pfad TA - N1 - N2 - N3 - N4 - TB geführte "Arbeits"-Datenverbindung zwischen dem ersten Teilnehmeranschluß 9a, und dem zweiten Teilnehmeranschluß 9b aufgebaut (in der Darstellung gemäß Figur 1 durch die aus durchgezogenen Linien bestehenden Pfeile verdeutlicht).

Ist die Verbindung erfolgreich bis zum zweiten Teilnehmeranschluß 9b hin aufgebaut worden, wird dies dem vierten Netzknoten 4 vom zweiten Teilnehmeranschluß 9b über ein entsprechendes, über den Lichtwellenleiter 21 gesendetes Signalisiersignal mitgeteilt, der diese Mitteilung über ein weiteres Verbindungsaufbau-Bestätigungs-Signalisiersignal an den dritten Netzknoten 3 weiterleitet, der seinerseits ein entsprechendes, an den zweiten Netzknoten 2 gerichtetes Verbindungsaufbau-Bestätigungs-Signalisiersignal versendet, der ein entsprechendes Signal an den ersten Netzknoten 1 verschickt.

Dieser sendet dann über den Lichtwellenleiter 20 das in Figur 2 gezeigte Verbindungsaufbau-Bestätigungs-Signalisiersignal S2 (PATH_OK (ref=V1)) an den ersten Teilnehmeranschluß 9a, welches u.a. die o.g. Verbindungskennung V1 enthält. Diese wird unter Steuerung einer (nicht dargestellten) Steuereinrichtung des ersten Teilnehmeranschlusses 9a in einer (ebenfalls nicht dargestellten) Teilnehmeranschluß-Speichereinrichtung abgespeichert.

Daraufhin veranlaßt die Teilnehmeranschluß-Steuereinrichtung, daß - zusätzlich zur o.g., über den Pfad TA - N1 - N2 - N3 - N4 - TB geführten "Arbeits"-Datenverbindung - eine weitere, über einen "Ersatz"-Pfad geführte "Ersatz"-Datenverbindung zum zweiten Teilnehmeranschlusses 9b aufgebaut wird (in der Darstellung gemäß Figur 1 durch aus gestrichelten Linien bestehenden Pfeilen verdeutlicht).

Der "Ersatz"-Pfad soll disjunkt zu dem o.g. "Arbeits"-Pfad sein, d.h. bei den beiden Verbindungen sollen jeweils unterschiedliche Wege zwischen den einzelnen Netzknoten 1, 2, 3, 4, 5, 6, 7 verwendet werden (Pfad-Diversität - in Figur 1 durch die dort dargestellten Pfeile verdeutlicht). Alternativ oder zusätzlich soll sich die "Ersatz"-Datenverbindung auf andere Weise von der "Arbeits"-Datenverbindung unterscheiden: Beispielsweise kann der Weg zwischen zwei Netzknoten bei beiden Verbindungen zwar identisch sein, jedoch sollen hierbei jeweils zwei verschiedene, die gleichen Netzknoten 1, 2, 3, 4, 5, 6, 7 verbindende, in verschiedenen Röhren angeordnete Lichtwellenleiterbündel 10, 11, 12, 13, 14, 15, 16, 17, 18, 19 oder Lichtwellenleiter verwendet werden (Duct-Diversität). Alternativ oder zusätzlich kann zwischen zwei Netzknoten bei beiden Verbindungen zwar die gleiche Röhre, jedoch verschiedene, in der gleichen Röhre angeordnete Lichtwellenleiterbündel 10, 11, 12, 13, 14, 15, 16, 17, 18, 19 verwendet werden, oder z.B. das gleiche Lichtwellenleiterbündel, jedoch unterschiedliche darin enthaltene Lichtwellenleiter (Faser-Diversität).

Alternativ oder zusätzlich können die "Arbeits"- und die "Ersatz"-Datenverbindung z.B. auch jeweils durch unterschiedliche Gebäude verlaufen (Gebäude-Diversität).

Zum Aufbau der "Ersatz"- Datenverbindung zwischen erstem und zweitem Teilnehmeranschluß 9a, 9b wird vom ersten Teilnehmeranschluß (TA) 9a aus über den Lichtwellenleiter 20 gemäß Figur 2 mittels entsprechender optischer Binärimpulse ein entsprechendes, weiteres Signalisiersignal S3 (SETUP (dest=TB; avoid=V1)) an den ersten Netzknoten (N1) 1 gesendet. In diesem (Ersatzverbindungsaufbau-Anfrage-) Signalisiersignal S3 ist die Kennung TB enthalten, die den Ziel-Teilnehmeranschluß (TB) 9b, bzw. dessen optische Netzadresse kennzeichnet, sowie die die aufgebaute "Arbeits"-Datenverbindung kennzeichnende Kennung V1. Wie im folgenden erläutert wird, sind die Steuereinrichtungen der Netzknoten des optischen Nachrichtennetzwerks 8 in der Lage, aufgrund der Angabe der "Arbeits"-Datenverbindung bzw. deren Kennung V1 eine "Ersatz"-Datenverbindung herzustellen, bei der ein Datenpfad verwendet wird, der disjunkt zu dem bei der "Arbeits"-Datenverbindung verwendeten Datenpfad ist.

Nach Empfang des Ersatzverbindungsaufbau-Anfrage-Signalisiersignal S3 wird im ersten Netzknoten 1 von dessen Netzknoten-Steuereinrichtung eine (noch nicht vergebene) die aufzubauende "Ersatz"-Datenverbindung kennzeichnende Verbindungskennung (hier: V2) ausgewählt, und in der entsprechenden Netzknoten-Speichereinrichtung abgespeichert. Der erste Netzknoten N1 (bzw. die Netzknoten-Steuereinrichtung) wählt dann einen der mit dem ersten Netzknoten 1 verbundenen Netzknoten als denjenigen Netzknoten aus, über den die "Ersatz"-Datenverbindung weitergeführt werden soll (hier: den sechsten Netzknoten 6), und zwar so, daß der sich hierdurch ergebende "Ersatz"-Pfad disjunkt zum o.g. "Arbeits"-Pfad ist (d.h. hier: daß die "Ersatz"-Datenverbindung über einen anderen Netzknoten weitergeschaltet wird, als die "Arbeits"-Datenverbindung). Dies ist möglich, weil wie oben erläutert der für die "Arbeits"-Datenverbindung verwendete Netzknoten (hier: der zweite Netzknoten 2) unter Zuordnung zur die "Arbeits"-Datenverbindung kennzeichnenden Verbindungskennung V1 in der Netzknoten-Speichereinrichtung abgespeichert ist.

(Anmerkung: sollen alternativ oder zusätzlich die "Arbeits"und die "Ersatz"-Datenverbindung z.B. Duct- bzw. Faser-divers sein, werden beim Aufbau der "Arbeits"-Datenverbindung unter Zuordnung zur Verbindungskennung V1 alternativ oder zusätzlich Informationen bzgl. der jeweils verwendeten Röhre, bzw. des jeweils verwendeten Lichtwellenleiterbündels bzw. Lichtwellenleiters in der Speichereinrichtung des ersten Netzknotens abgespeichert, und für die Weiterleitung der "Ersatz"-Datenverbindung hierzu unterschiedliche Röhren, Lichtwellenleiterbündel bzw. Lichtwellenleiter verwendet).

Die dem ausgewählten sechsten Netzknoten 6 zugeordnete Kennung (bzw. dessen Netzadresse) wird unter Zuordnung zur o.g. Verbindungskennung V2 in der Netzknoten-Speichereinrichtung des ersten Netzknotens 1 abgespeichert.

Als nächstes wird von der Netzknoten-Steuereinrichtung veranlaßt, daß vom ersten Netzknoten 1 aus über das Lichtwellenleiterbündel 10 ein dem o.g. Signalisiersignal S3 entsprechendes weiteres Ersatzverbindungsaufbau-Anfrage-Signalisiersignal an den ausgewählten sechsten Netzknoten 6 gesendet wird, das u.a. die o.g. den Ziel-Teilnehmeranschluß (TB) kennzeichnende Kennung TB, die die "Ersatz"-Datenverbindung kennzeichnende Verbindungskennung V2, sowie die die aufgebaute "Arbeits"-Datenverbindung kennzeichnende Kennung V1 enthält.

Die Verbindungskennung V2 wird in einer (nicht dargestellten) Speichereinrichtung des sechsten Netzknotens 6 abgespeichert. Dann wird in einer (ebenfalls nicht dargestellten) Netzknoten-Steuereinrichtung auf entsprechende Weise wie im ersten Netzknoten 1 zur Weiterführung der "Ersatz"-Datenverbindung einer der mit dem sechsten Netzknoten 6 verbundenen Netzknoten (hier: der siebte Netzknoten 7) ausgewählt, und zwar so, daß der sich hierdurch ergebende "Ersatz"-Pfad disjunkt zum o.g. "Arbeits"-Pfad ist (d.h. hier: daß die "Ersatz"-Datenverbindung über einen anderen Netzknoten weitergeschaltet wird, als die "Arbeits"-Datenverbindung). Hierzu wird zunächst geprüft, ob die die "Arbeits"-Datenverbindung kennzeichnende Verbindungskennung V1 in der Netzknoten-Speichereinrichtung abgespeichert ist (d.h. die "Arbeits"-Datenverbindung über den sechsten Netzknoten 6 geführt wird), und falls ja, über welchen Netzknoten die "Arbeits"-Datenverbindung vom Netzknoten 6 aus weitergeleitet wurde. Der entsprechende Netzknoten wird dann bei der Weiterschaltung der "Ersatz"-Datenverbindung nicht verwendet.

Die dem ausgewählten siebten Netzknoten 7 zugeordnete Kennung (bzw. dessen Netzadresse) wird unter Zuordnung zur o.g.

Verbindungskennung V2 in der Netzknoten-Speichereinrichtung des sechsten Netzknotens 6 abgespeichert.

Als nächstes wird von der Netzknoten-Steuereinrichtung veranlaßt, daß vom sechsten Netzknoten 6 aus an den ausgewählten siebten Netzknoten 7 ein dem o.g. Signalisiersignal S3 entsprechendes weiteres Ersatzverbindungsaufbau-Anfrage-Signalisiersignal gesendet wird, usw.

Auf diese Weise wird sukzessive eine über den Pfad TA - N1 - N6 - N7 - N4 - TB geführte "Ersatz"-Datenverbindung zwischen dem ersten Teilnehmeranschluß 9a, und dem zweiten Teilnehmeranschluß 9b aufgebaut, die zur "Arbeits"-Datenverbindung disjunkt ist.

Ist die Verbindung erfolgreich bis zum zweiten Teilnehmeranschluß 9b hin aufgebaut worden, wird dies dem vierten Netzknoten 4 vom zweiten Teilnehmeranschluß 9b mittels eines über den Lichtwellenleiter 21 gesendeten Signalisiersignals mitgeteilt, der diese Mitteilung über ein weiteres Ersatzverbindungsaufbau-Bestätigungs-Signalisiersignal an den siebten Netzknoten 7 weiterleitet, der seinerseits ein entsprechendes, an den sechsten Netzknoten 6 gerichtetes Ersatzverbindungsaufbau-Bestätigungs-Signalisiersignal versendet, der ein entsprechendes Signal an den ersten Netzknoten 1 verschickt.

Dieser sendet dann das in Figur 2 gezeigte Ersatzverbindungsaufbau-Bestätigungs-Signalisiersignal S4 (PATH_OK (ref=V2)) über den Lichtwellenleiter 20 an den ersten Teilnehmeranschluß 9a, welches u.a. die o.g. Verbindungskennung V2 enthält. Diese wird unter Steuerung der Teilnehmeranschluß-Steuereinrichtung des ersten Teilnehmeranschlusses 9a in der Teilnehmeranschluß-Speichereinrichtung abgespeichert.

Die Verbindungskennungen V1, V2 werden beim Aussenden der eigentlichen Nutzdaten durch den Teilnehmeranschluß 9a zur Kennzeichnung der jeweils zu verwendenden Verbindung verwendet. Die Nutzdaten können alternativ auch ohne Angabe der Verbindungskennungen V1, V2 übertragen werden, da bei der vorliegenden Durchschaltevermittlung eine implizite Zuordnung zwischen einer Verbindung und einer Wellenlänge auf einem bestimmten Lichtwellenleiter gegeben ist.

Die o.g. "Ersatz"-Datenverbindung kann z.B. nur dann vom Teilnehmeranschluß 9a zur Datenübertragung verwendet werden, wenn Störungen auf der "Arbeits"-Datenverbindung auftreten (oder die Störungen auf der "Arbeits"-Datenverbindung zu groß werden). Dadurch ist es möglich, bei auf der "Arbeits"-Datenverbindung auftretenden (starken) Störungen die Datenübertragung schnell auf die "Ersatz"-Datenverbindung umzuschalten. Alternativ können z.B. parallel über die "Arbeits"- und die "Ersatz"-Datenverbindung die gleichen Daten übertragen, und die jeweils bei der Übertragung auftretenden Bitfehlerraten gemessen werden. Auf Basis der jeweils auftretenden Bitfehlerraten wird dann entschieden, ob am zweiten Teilnehmeranschluß 9b die über die "Arbeits"-, oder die über die "Ersatz"-Datenverbindung gesendeten Daten als gültig angesehen werden sollen. Bei einer weiteren Alternative können verschiedene Daten über die "Arbeits"-, und über die "Ersatz"-Datenverbindung gesendet werden, und so die Datenübertragungsrate zwischen erstem und zweitem Teilnehmeranschluß 9a, 9b erhöht werden. Bei beiden Alternativen kann vorgesehen sein, bei (zu starken) Störungen auf einer der beiden Datenverbindungen die Datenübertragung komplett auf die jeweils andere Datenverbindung umzuschalten. In diesem Fall muß ein zusätzliches Protokoll zur Verhandlung der Nutzung der Kanäle eingesetzt werden.

Bei einem alternativen, zweiten Ausführungsbeispiel der Erfindung ist ein optisches Nachrichtennetzwerk entsprechend ähnlich wie das in Figur 1 gezeigte Nachrichtennetzwerk 8 aufgebaut.

Zum Aufbau einer (ungesicherten) "Arbeits"-Datenverbindung zwischen einem ersten und zweiten Teilnehmeranschluß 9a, 9b wird entsprechend wie beim ersten Ausführungsbeispiel vom ersten Teilnehmeranschluß (TA) 9a aus gemäß Figur 3 mittels entsprechender optischer Binärimpulse über den Lichtwellenleiter 20 ein erstes Signalisiersignal S11 (SETUP (dest=TB)) an den ersten Netzknoten (N1) 1 gesendet. In diesem (Verbindungsaufbau-Anfrage-)Signalisiersignal S11 ist die Kennung TB enthalten, die den Ziel-Teilnehmeranschluß (TB) 9b, bzw. dessen optische Netzadresse kennzeichnet. Hierdurch wird - entsprechend ähnlich wie beim ersten Ausführungsbeispiel - der sukzessive Aufbau einer über den Pfad TA - N1 - N2 - N3 - N4 - TB geführten "Arbeits"-Datenverbindung vom ersten zum zweiten Teilnehmeranschluß 9b veranlaßt (in der Darstellung gemäß Figur 1 durch die aus durchgezogenen Linien bestehenden Pfeile verdeutlicht).

Nachdem der erste Netzknoten 1 das o.g. Verbindungsaufbau-Anfrage-Signalisiersignal S11 erhalten hat, wird von einer (nicht dargestellten) Steuereinrichtung des ersten Netzknotens 1 eine die aufzubauende Verbindung kennzeichnende Verbindungskennung (hier: V1) ausgewählt, und in einer (nicht dargestellten) Netzknoten-Speichereinrichtung abgespeichert. Daraufhin wird die Verbindung mittels entsprechender weiterer (Verbindungsaufbau-Anfrage-)Signalisiersignale zum zweiten Netzknoten 2, von dort aus zum dritten und vierten Netzknoten 3, 4, und schließlich zum zweiten Teilnehmeranschluß 9b weitergeschaltet.

Ist die "Arbeits"-Datenverbindung erfolgreich aufgebaut worden, wird dies dem vierten Netzknoten 4 vom zweiten Teilnehmeranschluß 9b über ein entsprechendes Signalisiersignal mitgeteilt, der diese Mitteilung über ein weiteres Verbindungsaufbau-Bestätigungs-Signalisiersignal an den dritten Netzknoten 3 weiterleitet, der seinerseits ein an den zweiten Netzknoten 2 gerichtetes Verbindungsaufbau-Bestätigungs-Signalisiersignal versendet, der ein entsprechendes Signal an den ersten Netzknoten 1 verschickt.

Dieser sendet dann das in Figur 3 gezeigte Verbindungsaufbau-Bestätigungs-Signalisiersignal S12 (PATH_OK (ref=V1)) über den Lichtwellenleiter 20 an den ersten Teilnehmeranschluß 9a, welches u.a. die o.g. Verbindungskennung V1 enthält. Diese wird unter Steuerung einer (nicht dargestellten) Steuereinrichtung des ersten Teilnehmeranschlusses 9a in einer (nicht dargestellten) Teilnehmeranschluß-Speichereinrichtung abgespeichert.

Daraufhin veranlaßt die Teilnehmeranschluß-Steuereinrichtung, daß - zusätzlich zur o.g., über den Pfad TA - N1 - N2 - N3 - N4 - TB geführten - "Arbeits"-Datenverbindung eine weitere, über einen "Ersatz"-Pfad geführte "Ersatz"-Datenverbindung zum zweiten Teilnehmeranschluß 9b aufgebaut wird (in der Darstellung gemäß Figur 1 durch aus gestrichelten Linien bestehenden Pfeilen verdeutlicht).

Der "Ersatz"-Pfad soll disjunkt zu dem o.g. "Arbeits"-Pfad sein (Pfad-Diversität). Alternativ oder zusätzlich soll sich entsprechend wie beim ersten Ausführungsbeispiel die "Ersatz"-Datenverbindung auf andere Weise von der "Arbeits"-Datenverbindung unterscheiden, beispielsweise hinsichtlich der verwendeten Röhren, Lichtwellenleiterbündel, Lichtwellenleiter, etc.

Im Gegensatz zum Nachrichtennetzwerk gemäß dem oben erläuterten ersten Ausführungsbeispiel der Erfindung ist das Nachrichtennetzwerk gemäß dem zweiten Ausführungsbeispiel nicht selbständig in der Lage, basierend auf der Angabe der die "Arbeits"-Datenverbindung Kennung V1 selbständig eine zur "Arbeits"-Datenverbindung disjunkte "Ersatz"-Datenverbindung herzustellen (z.B. weil die "Ersatz"-Datenverbindung über einen Pfad eines anderen Netzbetreibers geführt werden soll, und/oder deshalb, weil im Gegensatz zum ersten Ausführungsbeispiel im Nachrichtennetzwerk dezentral, z.B. in den den einzelnen Netzknoten zugeordneten Speichereinrichtungen, Informationen bzgl. des für die "Arbeits"-Datenverbindung verwendeten Pfads, Lichtwellenleiterbündels, Lichtwellenleiters, etc. abgespeichert sind).

Vor dem Aufbau der "Ersatz"- Datenverbindung zwischen erstem und zweiten Teilnehmeranschluß 9a, 9b wird deshalb vom ersten Teilnehmeranschluß (TA) 9a aus gemäß Figur 3 mittels über den Lichtwellenleiter 20 übertragener optischer Binärimpulse zunächst ein Signalisiersignal S13 (GET_PATH (ref = V1)) an den ersten Netzknoten (N1) 1 gesendet. Dieses dient dazu, in der Speichereinrichtung des ersten Netzknotens 1 (oder anderswo im Nachrichtennetzwerk) gespeicherte Informationen bzgl. der von der "Arbeits"-Datenverbindung verwendeten Ressourcen (d.h. bzgl. des jeweils verwendeten "Arbeits"-Pfads, bzw. der jeweils verwendeten Röhren, Lichtwellenleiterbündel, Lichtwellenleiter) abzufragen.

In dem (Ressourcen-Abfrage-)Signalisiersignal S13 ist u.a. die die aufgebaute "Arbeits"-Datenverbindung kennzeichnende Kennung V1 enthalten.

Empfängt der erste Netzknoten 1 das Ressourcen-Abfrage-Signalisiersignal S13, werden von seiner Steuereinrichtung die o.g. in der Netzknoten-Speichereinrichtung gespeicherten Informationen bzgl. der von der "Arbeits"-Datenverbindung verwendeten Ressourcen ausgelesen (z.B. die Kennungen der Netzknoten, über die der "Arbeits"-Pfad geführt ist, bzw. deren optische Netzadressen).

Daraufhin wird gemäß Figur 3 von dem Netzknoten 1 aus über den Lichtwellenleiter 20 ein weiteres Signalisiersignal S14 (PATH_LIST (ref = V1; list = {N1, N2, N3, N4})) an den ersten Teilnehmeranschluß 9a gesendet. Dieses enthält - außer der die "Arbeits"-Datenverbindung kennzeichnenden Kennung V1 - u.a. eine Liste mit den Kennungen der Netzknoten, über die der "Arbeits"-Pfad geführt ist.

Nach Empfang des Ressourcen-Mitteilungs-Signalisiersignals S14 wird von der Steuereinrichtung des ersten Teilnehmeranschlusses 9a aus der Netzknoten-Kennungsliste diejenige Kennung entfernt, die dem Netzknoten zugeordnet ist, an den der erste Teilnehmeranschluß 9a angeschlossen ist (hier: der erste Netzknoten 1), sowie diejenige Kennung, die dem Netzknoten zugeordnet ist, an den der zweite Teilnehmeranschluß 9a angeschlossen ist (hier: der vierte Netzknoten 4).

Dann wird zum Aufbau der "Ersatz"- Datenverbindung zwischen erstem und zweitem Teilnehmeranschluß 9a, 9b vom ersten Teilnehmeranschluß (TA) 9a aus gemäß Figur 3 mittels über den Lichtwellenleiter 20 übertragener optischer Binärimpulse ein weiteres Signalisiersignal S15 (SETUP (dest=TB; avoid_list = {N2, N3})) an den ersten Netzknoten (N1) 1 gesendet. In diesem (Ersatzverbindungsaufbau-Anfrage-) Signalisiersignal S15 ist die Kennung TB enthalten, die den Ziel-Teilnehmeranschluß (TB) 9b, bzw. desssen optische Netzadresse kennzeichnet, sowie die beim Aufbau der "Ersatz"-Datenverbindung zu vermeidenden Ressourcen (hier: der durch den zweiten und dritten Netznoten 2, 3 gekennzeichnete "Arbeits"-Pfad).

Nach Empfang des Ersatzverbindungsaufbau-Anfrage-Signalisiersignals S15 wird im ersten Netzknoten 1 von der Netzknoten-Steuereinrichtung eine die aufzubauende "Ersatz"-Datenverbindung kennzeichnende Verbindungskennung (hier: V2) ausgewählt, und in der Netzknoten-Speichereinrichtung abgespeichert. Der erste Netzknoten N1 (bzw. die Netzknoten-Steuereinrichtung) wählt dann einen der mit dem ersten Netzknoten 1 verbundenen Netzknoten als denjenigen Netzknoten aus, über den die "Ersatz"-Datenverbindung weitergeführt werden soll (hier: den sechsten Netzknoten 6), und zwar so, daß der sich hierdurch ergebende "Ersatz"-Pfad disjunkt zum o.g. "Arbeits"-Pfad ist (d.h. hier: daß der nächste, verwendete Netzknoten nicht in der vom ersten Teilnehmeranschluß 9a erhaltenen Liste zu vermeidender Netzknoten 2, 3 enthalten ist).

Als nächstes wird von der Netzknoten-Steuereinrichtung veranlaßt, daß vom ersten Netzknoten 1 aus ein dem o.g. Signalisiersignal S15 entsprechendes weiteres Ersatzverbindungsaufbau-Anfrage-Signalisiersignal an den ausgewählten sechsten Netzknoten 6 gesendet wird, das u.a. die o.g. den Ziel-Teilnehmeranschluß (TB) kennzeichnende Kennung TB, die die "Ersatz"-Datenverbindung kennzeichnende Verbindungskennung V2, sowie die beim Aufbau der "Ersatz"-Datenverbindung zu vermeidenden Ressourcen enthält.

Dann wird in einer (nicht dargestellten) Netzknoten-Steuereinrichtung auf entsprechende Weise wie im ersten Netzknoten 1 zur Weiterführung der "Ersatz"-Datenverbindung ein mit dem sechsten Netzknoten 6 verbundener Netzknoten als derjenige Netzknoten ausgewählt, über den die "Ersatz"-Datenverbindung weitergeführt werden soll (hier: der siebte Netzknoten 7), und zwar wiederum so, daß der sich hierdurch ergebende "Ersatz"-Pfad disjunkt zum o.g. "Arbeits"-Pfad ist (d.h. hier: daß der nächste, verwendete Netzknoten nicht in der o.g. Liste zu vermeidender Netzknoten 2, 3 enthalten ist).

Auf diese Weise wird sukzessive eine über den Pfad TA - N1 - N6 - N7 - N4 - TB geführte "Ersatz"-Datenverbindung (in der Darstellung gemäß Figur 1 durch die aus gestrichelten Linien bestehenden Pfeile verdeutlicht) zwischen dem ersten Teilnehmeranschluß 9a, und dem zweiten Teilnehmeranschluß 9b aufgebaut, die zur "Arbeits"-Datenverbindung disjunkt ist.

Ist die Verbindung erfolgreich bis zum zweiten Teilnehmeranschluß 9b hin aufgebaut worden, wird dies dem vierten Netzknoten 4 vom zweiten Teilnehmeranschluß 9b über ein entsprechendes Signalisiersignal mitgeteilt, der diese Mitteilung über ein weiteres Ersatzverbindungsaufbau-Bestätigungs-Signalisiersignal an den siebten Netzknoten 7 weiterleitet, der seinerseits ein an den sechsten Netzknoten 6 gerichtetes Ersatzverbindungsaufbau-Bestätigungs-Signalisiersignal versendet, der ein entsprechendes Signal an den ersten Netzknoten 1 verschickt.

Dieser sendet dann über den Lichtwellenleiter 20 das in Figur 3 gezeigte Ersatzverbindungsaufbau-Bestätigungs-Signalisiersignal S16 (PATH_OK (ref=V2)) an den ersten Teilnehmeranschluß 9a, welches u.a. die o.g. Verbindungskennung V2 enthält. Diese wird unter Steuerung der Teilnehmeranschluß-Steuereinrichtung des ersten Teilnehmeranschlusses 9a in der Teilnehmeranschluß-Speichereinrichtung abgespeichert, und - beim Aussenden der eigentlichen Nutzdaten - zur Kennzeichnung der jeweils zu verwendenden Verbindung verwendet.

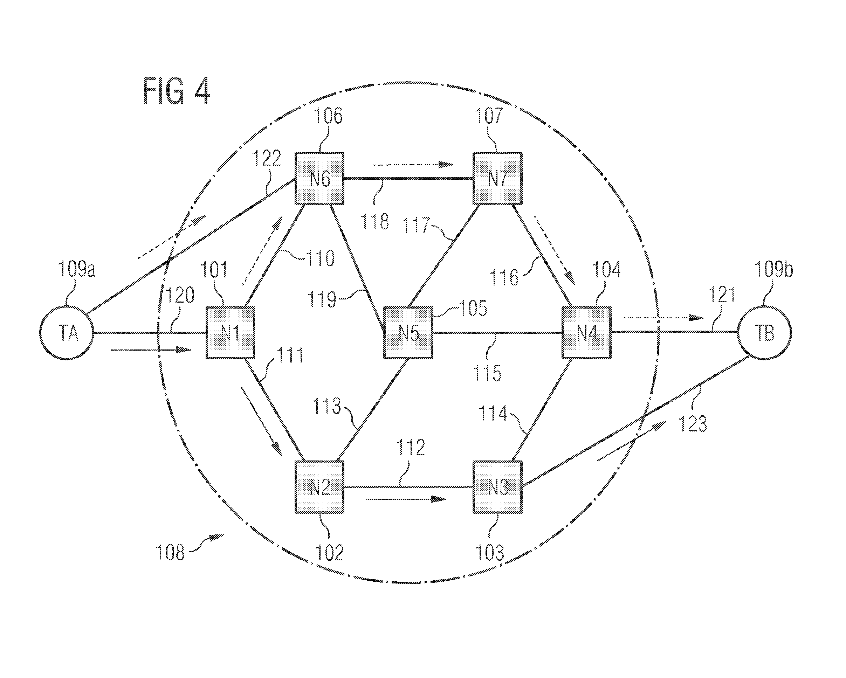

Bei den im Zusammenhang mit Figur 1 (und bei den folgenden, im Zusammenhang mit Figur 4) beschriebenen Ausführungsbeispielen ist davon ausgegangen worden, daß die über die "Arbeits"- bzw. die "Ersatz"-Datenverbindung übertragenen eigentlichen Nutzdaten, und die Signalisierinformationen (z.B. die Signale S1, S2, S3, S4) jeweils mittels entsprechender optischer Impulse, und jeweils über ein- und denselben Lichtwellenleiter übertragen werden. Bei alternativen Ausführungsbeispielen werden demgegenüber die Signalisierinformationen im Vergleich zu den Nutzinformationen über separate Lichtwellenleiter, und/oder über separate Pfade übertragen. Ebenfalls denkbar ist eine Übertragung der Signalisierinformationen über ein separates, elektrisches Übertragungsnetz. Ebenso kann der Austausch der Signalisierinformationen anstatt wie dargestellt zwischen den betroffenen Netzknoten auch zwischen den jeweils betroffenen Netzknoten, und einem oder mehreren zentralen Netznoten erfolgen, in welchen eine Verarbeitung der Signalisierinformationen durchgeführt wird.

Gemäß Figur 4 weist ein optisches Nachrichtennetzwerk bzw. optisches Transportnetz (OTN) 108 gemäß einem dritten Ausführungsbeispiel der vorliegenden Erfindung mehrere Netzknoten 101, 102, 103, 104, 105, 106, 107 sowie eine Vielzahl weiterer, hier nicht dargestellter Netzknoten auf.

Die Netzknoten 101, 102, 103, 104, 105, 106, 107 sind über ein Netz von jeweils einem oder mehreren Lichtwellenleiterbündeln 110, 111, 112, 113, 114, 115, 116, 117, 118, 119 miteinander verbunden. Jedes Lichtwellenleiterbündel 110, 111, 112, 113, 114, 115, 116, 117, 118, 119 weist einen oder mehrere Lichtwellenleiter auf.

Ein erster Netz-Teilnehmeranschluß (TA) 109a ist über einen ersten Lichtwellenleiter 120 an den ersten Netzknoten 101, und ein zweiter Netz-Teilnehmeranschluß (TB) 109b über einen zweiten Lichtwellenleiter 121 an den vierten Netzknoten 104 angeschlossen. Des weiteren ist - im Gegensatz zum oben erläuterten ersten und zweiten Ausführungsbeispiel - der erste Netz-Teilnehmeranschluß (TA) 109a zusätzlich noch über einen dritten Lichtwellenleiter 122 an den sechsten Netzknoten 106, und der zweite Netz-Teilnehmeranschluß (TB) 109b über einen vierten Lichtwellenleiter 123 an den dritten Netzknoten 103 angeschlossen.

Zur Datenübertragung zwischen dem ersten Netz-Teilnehmeranschluß 109a und dem zweiten Netz-Teilnehmeranschluß 109b (und umgekehrt) wird entsprechend wie bei den oben erläuterten Ausführungsbeispielen z.B. ein WDM-Datenübertragungsverfahren verwendet.

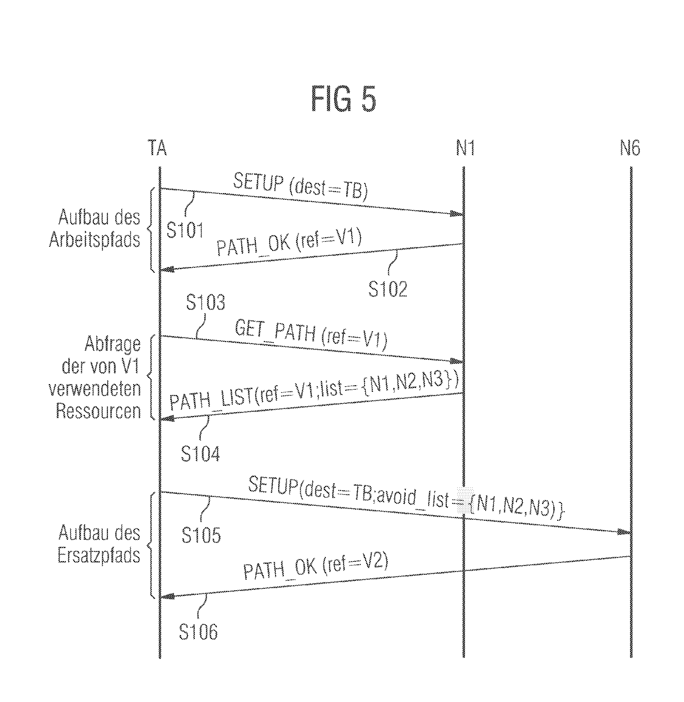

Zum Aufbau einer (ungesicherten) "Arbeits"-Datenverbindung zwischen dem ersten und zweiten Teilnehmeranschluß 109a, 109b wird entsprechend wie beim ersten und zweiten Ausführungsbeispiel vom ersten Teilnehmeranschluß (TA) 109a aus über den Lichtwellenleiter 120 gemäß Figur 5 mittels entsprechender optischer Binärimpulse ein erstes Signalisiersignal S101 (SETUP (dest=TB)) an den ersten Netzknoten (N1) 101 gesendet. In diesem (Verbindungsaufbau-Anfrage-)Signalisiersignal S101 ist eine Kennung TB enthalten, die den Ziel-Teilnehmeranschluß (TB) 109b, bzw. dessen optische Netzadresse kennzeichnet. Hierdurch wird - entsprechend ähnlich wie beim ersten und zweiten Ausführungsbeispiel - der sukzessive Aufbau einer über den Pfad TA - N1 - N2 - N3 - TB geführten "Arbeits"-Datenverbindung vom ersten zum zweiten Teilnehmeranschluß 109b veranlaßt (in der Darstellung gemäß Figur 1 durch die aus durchgezogenen Linien bestehenden Pfeile verdeutlicht).

Nachdem der erste Netzknoten 101 das o.g. Verbindungsaufbau-Anfrage-Signalisiersignal S101 erhalten hat, wird von einer (nicht dargestellten) Steuereinrichtung des ersten Netzknotens 101 eine die aufzubauende Verbindung kennzeichnende Verbindungskennung (hier: V1) ausgewählt, und in einer (nicht dargestellten) Netzknoten-Speichereinrichtung abgespeichert. Daraufhin wird die Verbindung mittels entsprechender weiterer (Verbindungsaufbau-Anfrage-) Signalisiersignale zum zweiten und dritten Netzknoten 102, 103, und von dort aus zum zweiten Teilnehmeranschluß 109b weitergeschaltet.

Ist die "Arbeits"-Datenverbindung erfolgreich aufgebaut worden, wird dies dem dritten Netzknoten 103 vom zweiten Teilnehmeranschluß 109b über ein entsprechendes Signalisiersignal mitgeteilt, der diese Mitteilung über ein weiteres Verbindungsaufbau-Bestätigungs-Signalisiersignal an den zweiten Netzknoten 102 weiterleitet, der seinerseits ein entsprechendes, an den ersten Netzknoten 101 gerichtetes Verbindungsaufbau-Bestätigungs-Signalisiersignal versendet.

Dieser sendet dann das in Figur 5 gezeigte Verbindungsaufbau-Bestätigungs-Signalisiersignal S102 (PATH_OK (ref=V1)) über den Lichtwellenleiter 120 an den ersten Teilnehmeranschluß 109a, welches u.a. die o.g. Verbindungskennung V1 enthält. Diese wird unter Steuerung einer (nicht dargestellten) Steuereinrichtung des ersten Teilnehmeranschlusses 109a in einer (nicht dargestellten) Teilnehmeranschluß-Speichereinrichtung abgespeichert.

Daraufhin veranlaßt die Teilnehmeranschluß-Steuereinrichtung, daß - zusätzlich zur o.g., über den Pfad TA - N1 - N2 - N3 - TB geführten "Arbeits"-Datenverbindung - eine weitere, über einen "Ersatz"-Pfad geführte "Ersatz"-Datenverbindung zum zweiten Teilnehmeranschlusses 109b aufgebaut wird (in der Darstellung gemäß Figur 1 durch aus gestrichelten Linien bestehenden Pfeilen verdeutlicht).

Der "Ersatz"-Pfad soll disjunkt zu dem o.g. "Arbeits"-Pfad sein (Pfad-Diversität). Alternativ oder zusätzlich soll sich entsprechend wie beim ersten oder zweiten Ausführungsbeispiel die "Ersatz"-Datenverbindung von der "Arbeits"-Datenverbindung beispielsweise hinsichtlich der verwendeten Röhren, Lichtwellenleiterbündel, Lichtwellenleiter, etc. unterscheiden.

Vor dem Aufbau der "Ersatz"-Datenverbindung zwischen erstem und zweitem Teilnehmeranschluß 109a, 109b wird vom ersten Teilnehmeranschluß (TA) 109a aus über den Lichtwellenleiter 120 gemäß Figur 5 mittels entsprechender optischer Binärimpulse zunächst ein Signalisiersignal S103 (GET_PATH (ref = V1)) an den ersten Netzknoten (N1) 101 gesendet. Dieses dient dazu, in der Speichereinrichtung des ersten Netzknotens 101 (oder anderswo im Nachrichtennetzwerk) gespeicherte Informationen bzgl. der von der "Arbeits"-Datenverbindung verwendeten Ressourcen (d.h. bzgl. des jeweils verwendeten "Arbeits"-Pfads, bzw. der jeweils verwendeten Röhren, Lichtwellenleiterbündel, Lichtwellenleiter, etc.) abzufragen.

In dem (Ressourcen-Abfrage-)Signalisiersignal S103 ist u.a. die die aufgebaute "Arbeits"-Datenverbindung kennzeichnende Kennung V1 enthalten.

Empfängt der erste Netzknoten 101 das Ressourcen-Abfrage-Signalisiersignal S103, werden von seiner Steuereinrichtung die o.g. in der Netzknoten-Speichereinrichtung gespeicherten Informationen bzgl. der von der "Arbeits"-Datenverbindung verwendeten Ressourcen ausgelesen (z.B. die Kennungen der Netzknoten, über die der "Arbeits"-Pfad geführt ist, bzw. deren optische Netzadressen).

Daraufhin wird gemäß Figur 5 von dem Netzknoten 101 aus über den Lichtwellenleiter 120 ein weiteres Signalisiersignal S104 (PATH_LIST (ref = V1; list = {N1, N2, N3})) an den ersten Teilnehmeranschluß 109a gesendet. Dieses enthält - außer der die "Arbeits"-Datenverbindung kennzeichnenden Kennung V1 - u.a. eine Liste mit den Kennungen der Netzknoten, über die der "Arbeits"-Pfad geführt ist.

Nach Empfang des Ressourcen-Mitteilungs-Signalisiersignals S104 wird zum Aufbau der "Ersatz"-Datenverbindung zwischen erstem und zweitem Teilnehmeranschluß 109a, 109b vom ersten Teilnehmeranschluß (TA) 9a aus über den Lichtwellenleiter 122 gemäß Figur 5 mittels entsprechender optischer Binärimpulse ein weiteres Signalisiersignal S105 (SETUP (dest=TB; avoid_list = {N1, N2, N3})) an den sechsten Netzknoten (N6) 106 gesendet. In diesem (Ersatzverbindungsaufbau-Anfrage-) Signalisiersignal S105 ist die Kennung TB enthalten, die den Ziel-Teilnehmeranschluß (TB) 109b, bzw. desssen optische Netzadresse kennzeichnet, sowie die beim Aufbau der "Ersatz"-Datenverbindung zu vermeidenden Ressourcen (hier: der durch den ersten, zweiten und dritten Netzknoten 101, 102, 103 gekennzeichnete "Arbeits"-Pfad).

Nach Empfang des Ersatzverbindungsaufbau-Anfrage-Signalisiersignal S105 wird im sechsten Netzknoten 106 von der entsprechenden Netzknoten-Steuereinrichtung eine die aufzubauende "Ersatz"-Datenverbindung kennzeichnende Verbindungskennung (hier: V2) erzeugt, und in der Netzknoten-Speichereinrichtung abgespeichert. Der sechste Netzknoten 106 (bzw. die Netzknoten-Steuereinrichtung) wählt dann einen der mit dem sechsten Netzknoten 106 verbundenen Netzknoten als denjenigen Netzknoten aus, über den die "Ersatz"-Datenverbindung weitergeführt werden soll (hier: den siebten Netzknoten 107), und zwar so, daß der sich hierdurch ergebende "Ersatz"-Pfad disjunkt zum o.g. "Arbeits"-Pfad ist (d.h. hier: daß der nächste, verwendete Netzknoten nicht in der vom ersten Teilnehmeranschluß 109a erhaltenen Liste zu vermeidender Netzknoten 101, 102, 103 enthalten ist).

Als nächstes wird von der Netzknoten-Steuereinrichtung des sechsten Netzknotens 106 veranlaßt, daß vom sechsten Netzknoten 106 aus ein dem o.g. Signalisiersignal S105 entsprechendes weiteres Ersatzverbindungsaufbau-Anfrage-Signalisiersignal an den ausgewählten siebten Netzknoten 107 gesendet wird, das u.a. die o.g. den Ziel-Teilnehmeranschluß (TB) kennzeichnende Kennung TB, die die "Ersatz"-Datenverbindung kennzeichnende Verbindungskennung V2, sowie die beim Aufbau der "Ersatz"-Datenverbindung zu vermeidenden Ressourcen enthält.

Dann wird in einer (nicht dargestellten) Netzknoten-Steuereinrichtung des siebten Netzknotens 107 auf entsprechende Weise wie im sechsten Netzknoten 106 zur Weiterführung der "Ersatz"-Datenverbindung ein mit dem siebten Netzknoten 107 verbundener Netzknoten als derjenige Netzknoten ausgewählt, über den die "Ersatz"-Datenverbindung weitergeführt werden soll (hier: der vierte Netzknoten 104), und zwar wiederum so, daß der sich hierdurch ergebende "Arbeits"-Pfad disjunkt zum o.g. "Arbeits"-Pfad ist (d.h. hier: daß der nächste, verwendete Netzknoten nicht in der o.g. Liste zu vermeidender Netzknoten 101, 102, 103 enthalten ist).

Auf diese Weise wird sukzessive eine über den Pfad TA - N6 - N7 - N4 - TB geführte "Ersatz"-Datenverbindung zwischen dem ersten Teilnehmeranschluß 109a, und dem zweiten Teilnehmeranschluß 109b aufgebaut, die zur "Arbeits"-Datenverbindung disjunkt ist.

Ist die Verbindung erfolgreich bis zum zweiten Teilnehmeranschluß 109b hin aufgebaut worden, wird dies dem vierten Netzknoten 104 vom zweiten Teilnehmeranschluß 109b über ein entsprechendes Signalisiersignal mitgeteilt, der diese Mitteilung über ein weiteres Ersatzverbindungsaufbau-Bestätigungs-Signalisiersignal an den siebten Netzknoten 107 weiterleitet, der seinerseits ein entsprechendes, an den sechsten Netzknoten 106 gerichtetes Ersatzverbindungsaufbau-Bestätigungs-Signalisiersignal versendet.

Dieser sendet dann über den Lichtwellenleiter 122 das in Figur 5 gezeigte Ersatzverbindungsaufbau-Bestätigungs-Signalisiersignal S106 (PATH_OK (ref=V2)) an den ersten Teilnehmeranschluß 109a, welches u.a. die o.g. Verbindungskennung V2 enthält. Diese wird unter Steuerung der Teilnehmeranschluß-Steuereinrichtung des ersten Teilnehmeranschlusses 109a in der Teilnehmeranschluß-Speichereinrichtung abgespeichert, und - beim Aussenden der eigentlichen Nutzdaten - zur Kennzeichnung der jeweils zu verwendenden Verbindung verwendet.

## Patentansprüche

1. Optisches Nachrichtennetzwerk (8), bei welchem über eine erste Datenverbindung optische Signale von einer ersten Sende-/Empfangseinrichtung (9a) über mehrere miteinander verbundene Netzknoteneinrichtungen (1, 2, 3, 4, 5, 6, 7) an eine zweite Sende-/Empfangseinrichtung (9b) übermittelt werden,
**dadurch gekennzeichnet,**
**dass** zum Aufbau einer zweiten Datenverbindung zwischen erster und zweiter Sende-/Empfangseinrichtung (9a, 9b) von der ersten Sende-/Empfangseinrichtung (9a) ein Datenverbindungsaufbau-Signalisiersignal (S3, S15) an eine mit der ersten Sende-/Empfangseinrichtung (9a) verbundene Netzknoteneinrichtung (1) gesendet wird, in welchem Informationen bezüglich des gewünschten Verlaufs der zweiten Datenverbindung enthalten sind.

2. Optisches Nachrichtennetzwerk (8), bei welchem die Informationen eine die erste Datenverbindung kennzeichnende Kennung (V1) enthalten.

3. Optisches Nachrichtennetzwerk (8) nach Anspruch 2, bei welchem durch die Informationen gekennzeichnet wird, daß die zweite Datenverbindung ganz oder teilweise disjunkt zur ersten Datenverbindung verlaufen soll.

4. Optisches Nachrichtennetzwerk (8) nach Anspruch 3, bei welchem die zweite Datenverbindung ganz oder teilweise über einen anderen Pfad verlaufen soll, als die erste Datenverbindung.

5. Optisches Nachrichtennetzwerk (8) nach Anspruch 3 oder 4, bei welchem die zweite Datenverbindung ganz oder teilweise über andere Lichtwellenleiterbündel verlaufen soll, als die erste Datenverbindung.

6. Optisches Nachrichtennetzwerk (8) nach Anspruch 3, 4, oder 5, bei welchem die zweite Datenverbindung ganz oder teilweise über andere Lichtwellenleiter verlaufen soll, als die erste Datenverbindung.

7. Optisches Nachrichtennetzwerk (8) nach Anspruch 1, bei welchem die Informationen Informationen bezüglich eines von der zweiten Datenverbindung zu vermeidenden, von der ersten Datenverbindung genutzten Pfads enthalten.

8. Optisches Nachrichtennetzwerk (8) nach Anspruch 1 oder 7, bei welchem die Informationen Informationen bezüglich von der zweiten Datenverbindung zu vermeidender, von der ersten Datenverbindung genutzter Lichtwellenleiterbündel oder Lichtwellenleiter enthalten.

9. Optisches Nachrichtennetzwerk (8) nach einem der vorhergehenden Ansprüche, bei welchem die erste Sende-/Empfangseinrichtung eine Teilnehmeranschlußeinrichtung ist.

10. Optisches Nachrichtennetzwerk (8) nach Anspruch 9, bei welchem die Teilnehmeranschlußeinrichtung an eine einzige Netzknoteneinrichtung (1) gekoppelt ist.

11. Optisches Nachrichtennetzwerk (8) nach Anspruch 9, bei welchem die Teilnehmeranschlußeinrichtung an mehrere Netzknoteneinrichtungen (101, 106) gekoppelt ist.

12. Optisches Nachrichtennetzwerk (8) nach einem der vorhergehenden Ansprüche, bei welchem die zweite Sende-/Empfangseinrichtung eine zweite Teilnehmeranschlußeinrichtung ist.

13. Optisches Nachrichtennetzwerk (8) nach Anspruch 12, bei welchem die zweite Teilnehmeranschlußeinrichtung an eine einzige Netzknoteneinrichtung (4) gekoppelt ist.

14. Optisches Nachrichtennetzwerk (8) nach Anspruch 12, bei welchem die zweite Teilnehmeranschlußeinrichtung an mehrere Netzknoteneinrichtungen (103, 104) gekoppelt ist.

15. Optisches Nachrichtennetzwerk (8) nach einem der vorhergehenden Ansprüche, bei welchem die zweite Datenverbindung als Ersatzdatenverbindung verwendet wird.

16. Optisches Nachrichtennetzwerk (8) nach Anspruch 15, bei welchem die zweite Datenverbindung dann als Ersatzdatenverbindung verwendet wird, wenn auf der ersten Datenverbindung Störungen oder zu starke Störungen aufreten.

17. Optisches Nachrichtennetzwerk (8) nach einem der vorhergehenden Ansprüche, bei welchem die über die erste und zweite Datenverbindung übertragenen Signale wellenlängengemultiplexte optische Signale sind.

18. Optisches Nachrichtennetzwerk (8) nach einem der vorhergehenden Ansprüche, bei welchem die erste Sende-/Empfangseinrichtung (9a) das Datenverbindungsaufbau-Signalisiersignal (S1) über den gleichen Lichtwellenleiter (20) oder das gleiche Lichtwellenleiterbündel überträgt, wie von ihm ausgesendete Nutzdaten-Signale.

19. Sende-/Empfangseinrichtung (9a), insbesondere Teilnehmeranschlußeinrichtung, welche so ausgestaltet und eingerichtet ist, daß sie als erste Sende-/Empfangseinrichtung in einem optischen Nachrichtennetzwerk (8) gemäß einem der Ansprüche 1 bis 18 verwendbar ist.

20. Optisches Nachrichtenübermittlungsverfahren, wobei über eine erste Datenverbindung optische Signale von einer ersten Sende-/Empfangseinrichtung (9a) über mehrere miteinander verbundene Netzknoteneinrichtungen (1, 2, 3, 4, 5, 6, 7) an eine zweite Sende-/Empfangseinrichtung (9b) übermittelt werden, **dadurch gekennzeichnet,**
**dass** das Verfahren den Schritt aufweist:
- Senden eines Datenverbindungsaufbau-Signalisiersignals (S1) an eine mit der ersten Sende-/Empfangseinrichtung (9a) verbundene Netzknoteneinrichtung (1) zum Aufbau einer zweiten Datenverbindung zwischen erster und zweiter Sende-/Empfangseinrichtung (9a, 9b), in welchem Informationen bezüglich des gewünschten Verlaufs der zweiten Datenverbindung enthalten sind.

21. Optisches Nachrichtennetzwerk (8) nach einem der Ansprüche 1 bis 17, bei welchem die erste Sende-/Empfangseinrichtung (9a) das Datenverbindungsaufbau-Signalisiersignal (S1) über einen anderen Leiter überträgt, als von ihm ausgesendete Nutzdaten-Signale, insbesondere als elektrisches Signalisiersignal über einen elektrischen Leiter, oder als optsiches Signalisiersignal über einen weiteren Lichtwellenleiter.

22. Optisches Nachrichtennetzwerk (8) nach einem der Ansprüche 1 bis 18, oder nach Anspruch 21, bei welchem mit Hilfe eines weiteren Datenverbindungsaufbau-Signalisiersignals (S13) eine Liste von von der ersten Datenverbindung genutzten Netzelementen, insbesondere Netzknoteneinrichtungen, Lichtwellenleiter, oder Lichtwellenleiterbündel abgefragt wird.
